Europäisches Patentamt

European Patent Office

Office européen des brevets

(11) Publication number: **0 507 328 A2**

# EUROPEAN PATENT APPLICATION

(21) Application number: **92105795.6**

(22) Date of filing: **03.04.92**

(51) Int. Cl.5: **B41J 2/51**

(30) Priority: **05.04.91 JP 73023/91**
**07.01.92 JP 18518/92**

(43) Date of publication of application:
**07.10.92 Bulletin  92/41**

(84) Designated Contracting States:
**DE FR GB**

(71) Applicant: **SEIKO EPSON CORPORATION**
**4-1, Nishishinjuku 2-chome**
**Shinjuku-ku Tokyo(JP)**

(72) Inventor: **Hirano, Seiichi**
**c/o Seiko Epson Corporation, 3-5, Owa**
**3-chome**
**Suwa-shi, Nagano(JP)**
Inventor: **Ohshima, Keiichi**
**c/o Seiko Epson Corporation, 3-5, Owa**
**3-chome**
**Suwa-shi, Nagano(JP)**

(74) Representative: **Diehl, Hermann Dr. et al**
**Diehl & Glaeser, Hiltl & Partner**
**Flüggenstrasse 13**
**W-8000 München 19(DE)**

(54) **Printing method for serial printer and serial printer.**

(57)  A printing method for a serial printer in which data are printed with a print head having a plurality of print elements arranged in a sheet forwarding direction at a predetermined interval while moving the head in a head feeding direction perpendicular to the sheet forwarding direction. The method includes the steps of a) setting a printing density so that a first portion of the print head prints with a high density and a second portion of the print head permits with a low density; b) moving the print head in the head feeding direction to print a first pass with a first high density portion and a first low density portion on the paper; c) forwarding the paper in the sheet forwarding direction so that a portion of the print head overlaps the first low density printed portion; d) setting the printing density such that the overlapping portion of the print head prints with the low density and a nonoverlapping portion prints with the high density; and e) moving the print head in the head feeding direction to print a second low density portion overlapping the first low density portion and a second high density portion adjacent thereto opposite the first high density portion.

EP 0 507 328 A2

The present invention relates to a printing method for a serial printer and to a serial printer.

A conventional printing method for a serial printer will hereunder be described, taking a 24-pin impact dot printer as an example. The pin arrangement of a 24-pin print head is such that two columns of pins, each composed of 12 pins, are arranged in a staggered fashion, as shown in Figure 1. If a symbol which is 24 dots high and 12 dots wide (the symbol pattern being defined by the hatched dots) is to be printed, it can be reproduced as shown in Figure 2. To print a symbol whose height is greater than 24 dots, the symbol has heretofore been recorded by dividing the symbol into two or more parts and printing the symbol in two or more passes, as illustrated in Figure 3. However, this printing method is accompanied by certain problems.

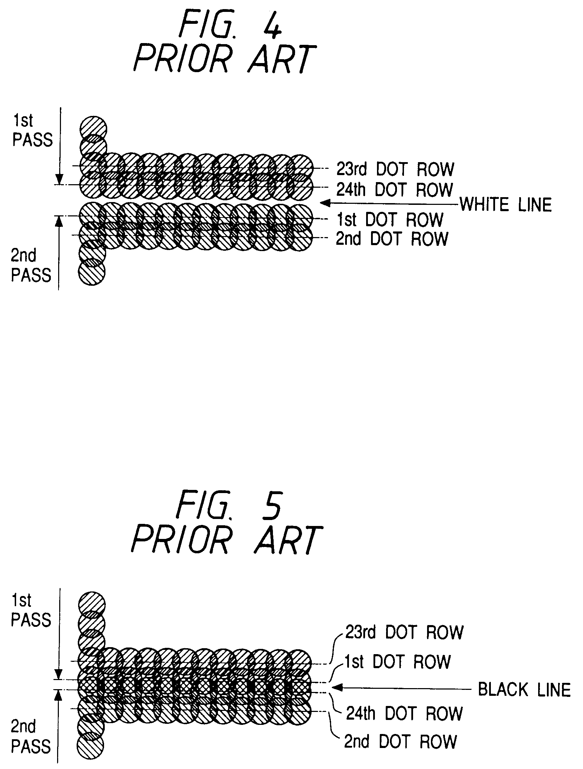

Specifically, if the sheet forwarding distance is not precisely correct due, for example, to variations in the accuracy of components forming the sheet forwarding mechanism such as eccentricity of a sheet forwarding roller or a platen, variations in the positioning accuracy of a drive motor, or slight variations in the recording sheet itself, the interval between dots can be unduly increased if the sheet forwarding distance is increased. This causes a white line to be interposed between the portions of the symbol printed on the first and second passes, as shown in Figure 4, leading to a white line being produced in the printed symbol. On the other hand, if the sheet forwarding distance is decreased, and if the ink density is reduced, for instance, near the end of the life of the ink ribbon, dots are overlapped between the first and second passes to appear as a highlighted black line, as shown in Figure 5, thus also impairing the print quality. To prevent such deterioration in the print quality, a sheet forwarding mechanism exhibiting a satisfactory accuracy and resistance to variations over its service life must be employed. Such mechanisms, however, are expensive and a hindrance to reducing the manufacturing cost of a printer.

Accordingly, the invention has been made to overcome the above problems, and an object of the invention is to provide an inexpensive serial printing method and printer capable of ensuring a satisfactory print quality even if the sheet forwarding distance is varied. This object is solved by the serial printing method of independent claim 1 or 3 and the printer of independent claim 2. Further advantageous features, aspects and details of the invention are evident from the dependent claims, the description and the drawings. The claims are intended to be understood as a first non-limiting approach of defining the invention in general terms.

In the process and the printer of the present invention, print data whose height is greater than a maximum print height that can be printed in a single pass of a printing head is printed with a plurality of passes without forwarding a sheet.

Another aspect of the invention is to provide a serial printer which is capable of printing image data involving a plurality of passes with high quality while requiring no high dimensional accuracy of components.

A printing method of the invention is characterized as reducing a recording density in a head moving direction by half a recording density in a non-overlapping row every pass, so that, when print data whose height is greater than a maximum height printable with a single pass without forwarding the sheet, a part of the print data to be recorded in a next pass can be recorded so as to overlap a previous pass by one or more dot rows and so that, in the overlapping dot row or rows, dots of the previous pass and dots of the next pass are arranged in a staggered manner.

According to another aspect of the invention, to overcome the above problems the invention is applied to a serial printer comprising: a data judgment means for detecting selection of an image data print mode; a sheet forwarding distance output means for forwarding a sheet by (H-N) dots obtained by subtracting at least N dot(s) (N being an integer equal to and greater than 1) from a maximum print height consisting of H dots; a sampling means for extracting all data belonging to an area from a first dot row to an (H-N)$th$ dot row and either only even-numbered data points or odd-numbered data points of the data belonging to an area from an (H-N+1)$th$ dot row and onwards in a first print pass, and extracting all data belonging to an area from an (N+1)$th$ dot row and onwards and either only even-numbered or odd-numbered data points of the data belonging to an area from a first dot row to an N$th$ dot row in a second print pass; and means for driving a recording head based on data from the sampling means.

In the case where a pattern involving a single pass is to be printed, the printer forwards a sheet so as to correspond to sheet forwarding data from a host unit and prints the pattern as stored in a print buffer.

On the other hand, to print a pattern involving a plurality of passes, the printer not only forwards a sheet through a distance smaller by N dots than the maximum print height of the recording head with for data to be printed with a second pass, but also prints only even-numbered or odd-numbered data points from the data equivalent to the N$th$ dot row at which the data overlap with both the first and second passes, so that the overlapping area is printed with two passes of printing. As a result, even if the sheet forwarding mechanism is operated less accurately and thus the sheet forwarding distance is somewhat inaccurate, any

2

increase or decrease in dot density is dispersed to prevent the production of high contrast white or black lines.

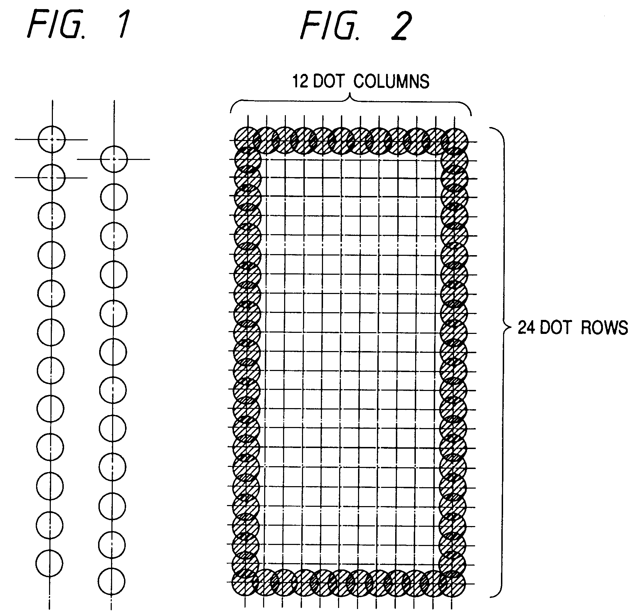

Figure 1 is a diagram showing an exemplary pin arrangement of a head of a printer;

Figure 2 is a diagram showing a pin arrangement of a head of the printer for printing a symbol which is 24 dots high and 12 dots wide;

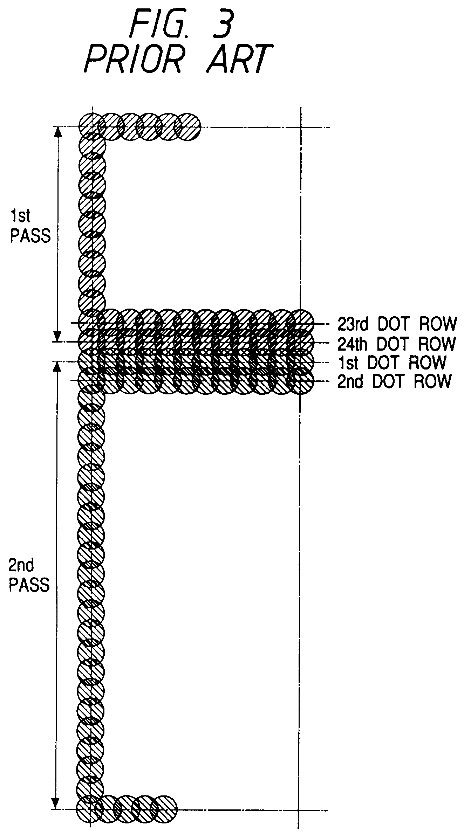

Figures 3 through 5 are diagrams showing exemplary prints produced by a conventional method.

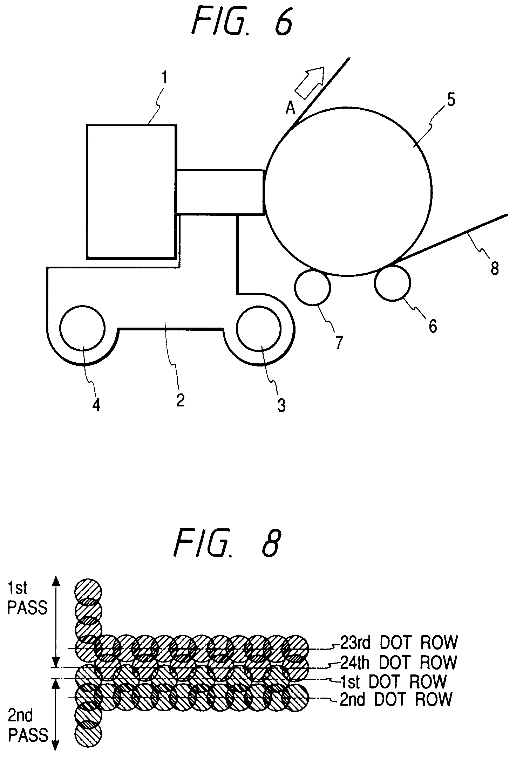

Figure 6 is a sectional view generally showing an exemplary serial printer used to embody a printing method of the invention;

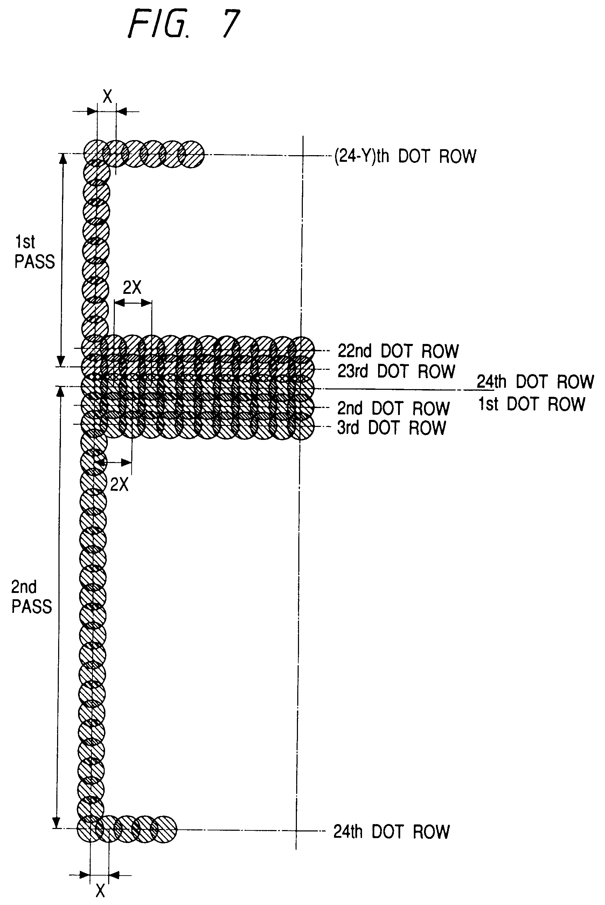

Figures 7 through 10 are diagrams showing exemplary prints produced by the method of the invention;

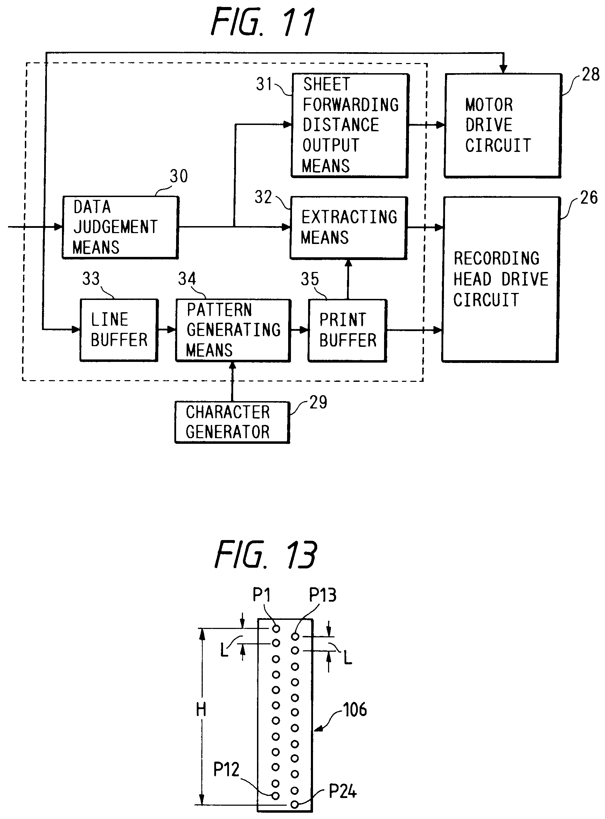

Figure 11 is a block diagram showing an embodiment of a control unit of a serial printer of the invention;

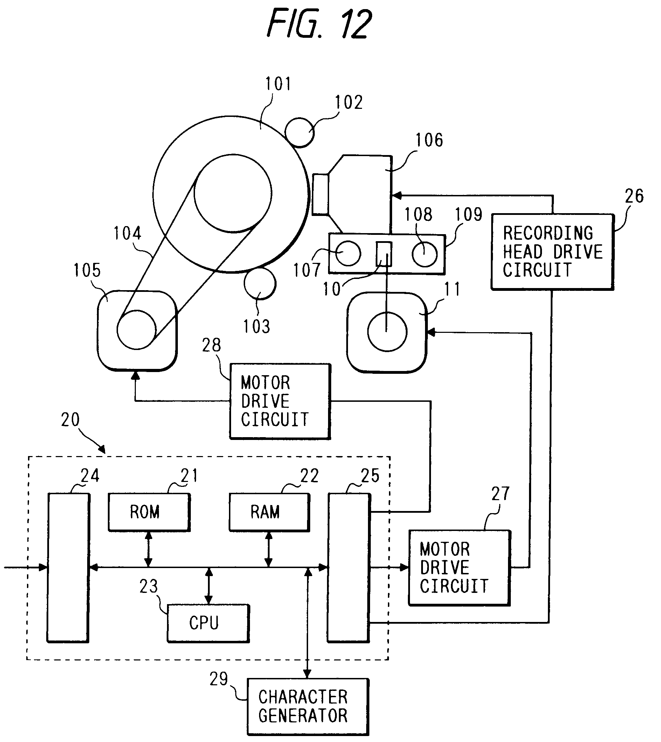

Figure 12 is a configurational diagram showing an apparatus constructed in accordance with a preferred embodiment of the invention;

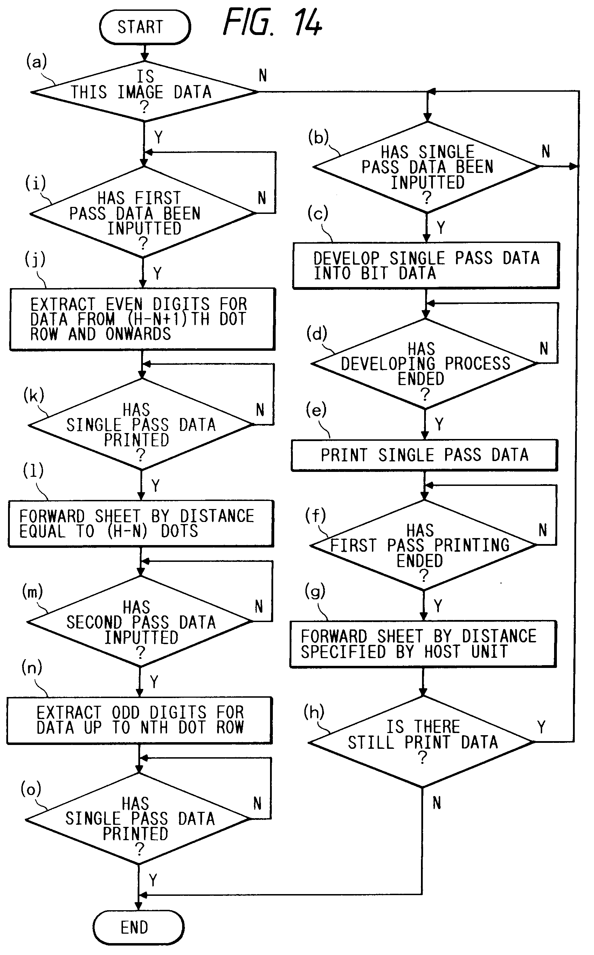

Figure 13 is a front view showing an exemplary recording head used in the above apparatus;

Figure 14 is a flowchart showing operations of the apparatus;

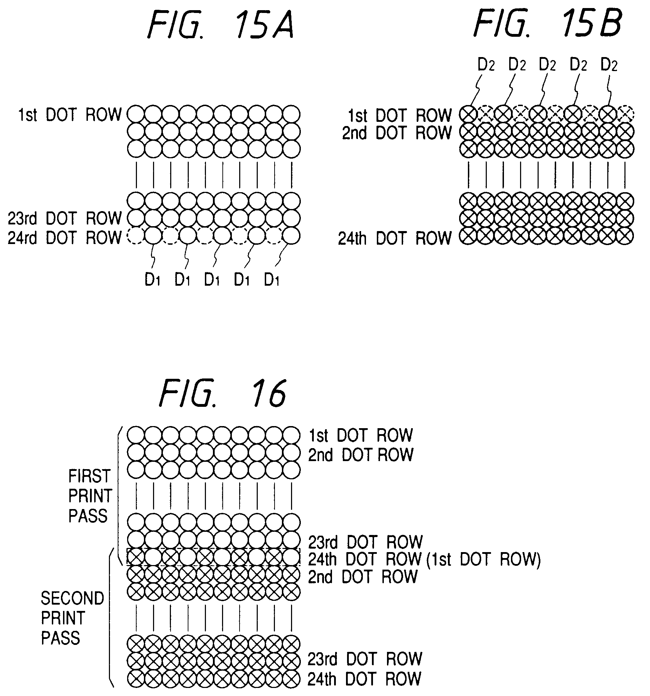

Figures 15A and 15B are diagrams schematically showing print data in the apparatus;

Figure 16 is a diagram illustrative of a printed output in the case where the sheet forwarding operation is normal in the apparatus;

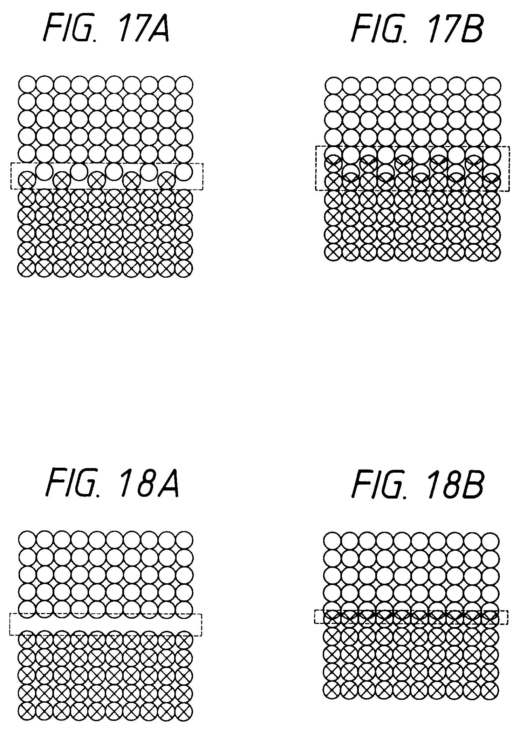

Figures 17A and 17B are diagrams respectively illustrative of printed outputs in cases where the sheet forwarding distance is increased and decreased due to sheet forwarding errors in the apparatus; and

Figures 17B and 18B are diagrams respectively illustrative of printed outputs in cases where the sheet forwarding distance is increased and decreased due to sheet forwarding errors in the apparatus.

Preferred embodiments of the invention will hereunder be described, taking a 24-pin serial printer as an example, as in the case of the conventional example.

Figure 6 is a sectional view showing an ordinary serial printer. Reference numeral 1 designates a head; 2, a carriage mounting the head 1; and 3, 4, guide shafts of the carriage. Reference numeral 5 designates a platen; 6, 7, paper biasing rollers; and 8, a sheet. The sheet 8 is forwarded in a direction indicated by an arrow A by the platen 5. The carriage 2 on which the head 1 is mounted is driven along the guide shafts 3, 4 in a direction vertical to the sheet surface to print.

The pins, which are print elements of the head 1, are arranged as shown in Figure 1 in the same way as in the conventional example. A symbol which is 24 dots high (the symbol pattern being defined by the hatched dots) is similarly printed as shown in Figure 2.

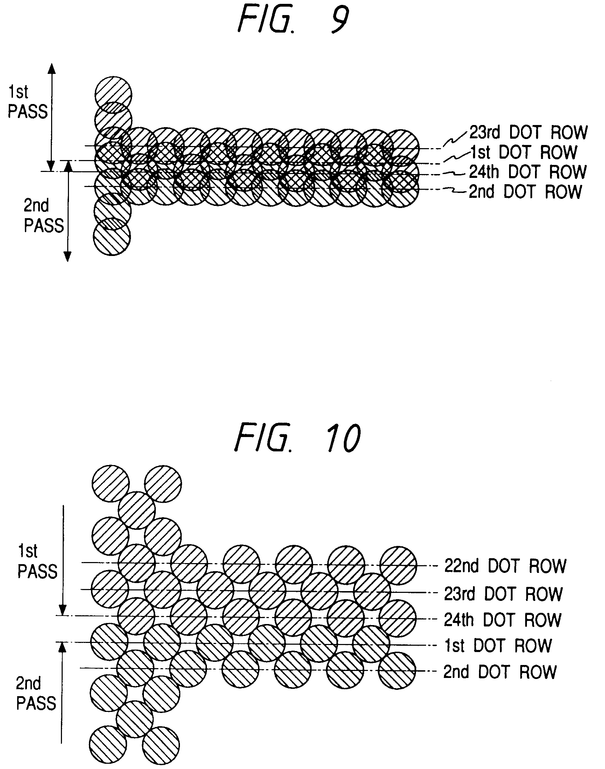

Figure 7 shows an example in which a symbol which is higher than 24 dots, *e.g.*, 24 dots plus Y dots (Y≦23), is printed using the printing method of the invention. First, the (24-Y)$th$ dot row to the 23$rd$ dot row are recorded at a recording pitch X in the head moving direction with a first pass, and the 24$th$ dot row is recorded at a pitch 2X. Then, after the sheet has been forwarded correctly by 23 dot rows (in the forward direction) the first dot row is recorded at the recording pitch 2X and the dot rows from the second to the 24$th$ are recorded at the recording pitch X. Figure 8 shows an exemplary print when the sheet forwarding distance is slightly increased, while Figure 9 shows an exemplary print when the sheet forwarding distance is slightly decreased. As is understood from these figures, no white line appears even if the sheet forwarding distance is changed, while the black line runs zigzag, not straight as in the conventional case.

Table 1 compares the print quality at the beginning stage of the life of an ink ribbon with that at its ending stage when the sheet forwarding distance is changed from 0 to +.028 cm (±4/360 inches). Alphabetic characters, one 36 dots high and the other 72 dots high, were printed with a vertical recording density of .014 cm (1/180 inches) and a horizontal recording density of .0070 cm (1/360 inches) by both the printing method of the invention and the conventional printing method using a head whose pin diameter was about .021 cm (1/120 inches). In Table 1, x denotes below average results, denotes average results and O denotes superior results.

TABLE 1

| Defective sheet distance cm (inches) forwarding | Invention | | Conventional Example | |
|---|---|---|---|---|
| | Beginning | End | Beginning | End |
| +.021 (+3.0/360) | X | X | X | X |
| +.018 (+2.5/360) | X | X | X | X |
| +.014 (+2.0/360) | △ | X | X | X |
| +.011 (+1.5/360) | ○ | ○ | △ | △ |
| +.007 (+1.0/360) | ○ | ○ | ○ | ○ |
| 0 (0/360) | ○ | ○ | ○ | ○ |
| -.007 (-1.0/360) | ○ | ○ | ○ | ○ |
| -.011 (-1.5/360) | ○ | ○ | △ | X |
| -.014 (-2.0/360) | △ | X | X | X |
| -.018 (-2.5/360) | X | X | X | X |
| -.021 (-3.0/360) | X | X | X | X |

As can be seen from Table 1, the invention provides superior results over a greater range of the defective sheet forwarding distance than the conventional arrangement.

Further, as shown in Figure 10, substantially the same results were obtained when the dots were formed at a higher print speed with the recording density reduced by half (a checkered pattern), while using a similar head.

A second embodiment of the invention will now be described with reference to Figs. 11-18.

Figure 11 shows an exemplary serial printer having a dot matrix type recording head, to which the second embodiment of the invention is applied. In Figure 12, reference numeral 101 designates a platen roller which holds a recording sheet on its surface under a predetermined pressure from sheet biasing rollers 102, 103 and forwards the sheet through a predetermined distance when driven by a sheet forwarding pulse motor 105 connected thereto through a transmission mechanism 104.

Reference numeral 106 designates a recording head, which is movably disposed on guide members 107, 108 through a carriage 109, the guide members being disposed along the length of the platen roller 1. As shown in Figure 13, a plurality of wires, here, two columns of wires, each composed of 12 wires arranged at a predetermined interval L, extend in staggered manner by a distance half the interval L so that a maximum print height consisting of H dots can be printed.

Referring to Figure 12, the carriage 109 is connected to a carriage driving pulse motor 11 which drives the carriage to perform an auxiliary scanning operation of the recording sheet while moving the carriage in the sheet width direction.

In Figure 12, reference numeral 20 designates a controller implemented with a microcomputer that supervises printing operations. The controller includes: a ROM 21 storing programs for controlling the printing operations; a RAM 22 including a working memory for developing dot pattern data to be printed, a reception buffer, and a print buffer; and a CPU 23. The controller converts print data inputted from the host unit through an interface 24 into bit map data, delivers the converted data to a recording head drive circuit 26 through an interface 25, and outputs a shift signal and a sheet forwarding signal to motor drive circuits 27, 28, respectively. In Figure 12, reference numeral 29 designates a character generator that converts character code data to bit map data.

Figure 11 is a block diagram showing functions to be performed by the microcomputer 20. The microcomputer 20 is programmed so as to implement a data judgment section 30 for judging whether or not image data inputted from the host unit is data printable with a single pass or data that must be printed with two passes, a sheet forwarding distance output section 31 for setting a sheet forwarding distance equivalent to (H-N) dots obtained by subtracting N dots from the maximum print height H of the recording head 106, and a sampling unit 33 which extracts from the bit map data stored in a print buffer 35 all data belonging to an area defined by a first dot row to an (H-N)$th$ dot row as well as either only even-numbered or odd-numbered data points of the data belonging to specific area from an (H-N+1)$th$ dot row and

4

onwards in a first printing pass, and which extracts all data belonging to an area from an $(N+1)th$ dot row and onwards as well as either only even-numbered or odd-numbered data point of the data belonging to an area from a first dot row to an $Nth$ dot row in a second print pass, and which reduces the dot density by half in each print pass.

The operation of the thus-constructed apparatus will be described next with reference to the flowchart shown in Figure 14.

Upon the output of a code signal from the host unit (Step a), a dot pattern of a character corresponding to the code signal is read from the character generator 29 to generate bit map data therefrom in a pattern generating section 34 and develop the generated bit map data in the print buffer 35 (Step c). Upon completion of developing the data equivalent to a single pass (Step d), these data are sequentially applied to the recording head 106 to print the character (Step e). When the data equivalent to the single pass has been printed (Step f), the microcomputer forwards the recording sheet by a distance equal to the single-pass distance specified by the host unit (Step g) and performs the same process again if there are still data to be printed (Step h).

On the other hand, when data to be processed as image data requiring two passes has been inputted (Step a), the microcomputer, upon storage of bit map data equivalent to a single pass in the print buffer 35 (Step i), extracts bit data as developed in the print buffer 35 with respect to data from the first dot row to the $(H-N)th$ dot row (or a $23rd$ dot row in the second embodiment), and extracts only even columns $D_1$ from the bit data forming the $(H-N+1)th$ dot row and onwards (or the $24th$ row in the second embodiment) (Step j) (Figure 15A). As a result, all the dots from the first dot row to the $23rd$ dot row as well as only the even column dot data $D_1$ of the lowermost dot row are printed (Figure 16).

Upon the completion of printing of the first pass (Step h), the sheet is forwarded by a distance equivalent to (H-N) dots obtained by subtracting N dots from the maximum print height of the recording head 106, the maximum print height consisting of H dots, i.e., H-1 dots in the second embodiment, and 23 dot rows in this embodiment (Step L). As a result, the uppermost dot-forming element $P_1$ of the recording head is positioned on the same line as the already printed lowermost dot line.

At the same time, with respect to the first through $Nth$ dot rows stored in the print buffer 35 (or with respect to the first dot row in the second embodiment), dot data in odd columns are outputted directly to the recording head 106, while with respect to the $(N+1)th$ dot row to the H dot row (the second to the $24th$ dot rows in the second embodiment), data stored in the print buffer 35 are outputted to the recording head 106 directly.

Since the sheet recording length is smaller than the dot-forming maximum height H of the recording head by one dot in the second embodiment, there is an overlap of the dots printed in the last pass by a single dot row (an area defined by a dotted line in Figure 16). However, the dots printed here represent odd column data $D_2$ which have not been printed in the last pass. Thus, the dot density in this area requires two passes of the recording head to achieve the same printing density as in other areas.

If the accuracy of the sheet forwarding mechanism has deteriorated due to the mechanism being used for a long time such that printing position errors equal to a single dot or so occur, the resulting effective error with the invention of one-half dot or so will not result in the formation of white and black lines (as shown highlighted in Figures 17A and 17B). Thus, with the invention, the print quality is prevented from being significantly impaired.

On the other hand, in the conventional apparatus which prints all data at the same density, any error in the sheet forwarding distance brings about a drastic deterioration in the print quality with white and black lines being conspicuous, as shown in Figures 18A and 18B.

While it is so designed in the second embodiment that a sheet is forwarded by a distance that is one dot less the height of the recording head when image data is printed, the same effect of course can be obtained by making the distance smaller by two or three dots.

Further, while the image data involving two passes of printing has been taken as an example in the description above, it is obvious that the invention can similarly be applied to image data covering an entire single page.

That is, the sheet forwarding distance per pass is set to (H-N) dots, and with respect to data from the first dot row to the $Nth$ dot row as well as data from the $(H-N+1)th$ dot row to the $Hth$ dot row of the recording head, only dot data belonging to odd columns or even columns are extracted while dividing the printing operation into an odd pass and an even pass, so that the data in the border area can be printed with two passes of printing. This operation can be repeated to print the image data on the entire page.

As described above, the invention does not cause white or black lines to appear straight compared to those produced by the conventional method, thereby increasing the range of sheet forwarding distance allowance which can ensure a satisfactory print quality. As a result, a serial printer which can employ less accurately operated, inexpensive components and which ensures an acceptable level of print quality even if the sheet forwarding distance is varied can be provided.

Further, as described above, the invention includes a data judgment section for detecting selection of an image data print mode; a sheet forwarding distance output section for forwarding a sheet by a distance of (H-N) dots, which value is obtained by subtracting at least N dot(s) (N being an integer equal to and greater than 1) from a maximum print height of H dots; a sampling section for extracting all data belonging to an area from a first dot row to an (H-N)*th* dot row and either only even-numbered or odd-numbered data of the data belonging to an area from an (H-N+1)*th* dot row and onwards in a first print pass, and extracting all data belonging to an area from an (N+1)*th* dot row and onwards and either only even-numbered or odd-numbered data points from a first dot row to an N*th* dot row in a second print pass; and a device for driving a recording head based on data from the sampling section. Therefore, the bordering dot row is printed with two passes, one for the even-numbered data points and the other for the odd-numbered data points. This allows the density of the printed dots in the bordering row to be neither zero nor doubled compared with the density of the printed dots in the other rows, even if the accuracy of the sheet forwarding mechanism has deteriorated when data requiring two passes of printing is to be printed. As a result, the contrast of lines appearing in consequence to shifts in the bordering row can be minimized, which then contributes to preventing a drastic deterioration in the printing quality.

## Claims

1. A printing method for a serial printer in which data are printed with a print head having plurality of print elements arranged in a sheet forwarding direction at a predetermined interval while moving said head in a head moving direction perpendicular to said sheet forwarding direction, said printing method comprising the step of:

   reducing the recording density in said head moving direction by half a recording density in a nonoverlapping row every pass, so that, when print data whose height is greater than a maximum height printable with a single pass without forwarding said sheet, a part of said print data to be recorded in a next pass can be recorded so as to overlap a previous pass by one or more dot rows and so that, in said overlapping dot row or rows, dots of said previous pass and dots of said next pass are arranged in staggered manner.

2. A serial printer, comprising:

   data judgment means (30) for detecting selection of an image data print mode;

   sheet forwarding distance output means (31) for forwarding a sheet by, H-N dots obtained by subtracting at least N dot(s), N being an integer equal to and greater than 1, from a maximum print height consisting of H dots;

   sampling means (33) for extracting all data belonging to an area from a first dot row to an H-Nth dot row and one of even digits and odd digits of data belonging to an area from an H-N+lth dot row and onwards in a first print pass, and extracting all data belonging to an area from an N+lth dot row and onwards and the other of said even digits and odd digits of data belonging to an area from a first dot row to an Nth dot row in a second print pass; and

   means (26) for driving a recording head (106) based on data from said sampling means (33).

3. A printing method for a serial printer in which data are printed with a print head having a plurality of print elements arranged in a sheet forwarding direction at a predetermined interval while moving said head in a head feeding direction perpendicular to said sheet forwarding direction, said method comprising the following steps:
   a) setting a printing density so that a first portion of said print head prints with a high density and a second portion of said print head prints with a low density;
   b) moving said print head in said head feeding direction to print a first pass with a first high density portion and a first low density portion on said paper;
   c) forwarding said paper in said sheet forwarding direction so that a portion of said print head overlaps said first low density printed portion;

d) setting said printing density such that said overlapping portion of said print head prints with said low density and a nonoverlapping portion prints with said high density; and

e) moving said print head in said head feeding direction to print a second low density portion overlapping said first low density portion and a second high density portion adjacent thereto opposite said first high density portion.

4. The method of claim 3, wherein said step of setting the printing density so that said second portion of said printing head prints with a low density comprises setting said printing head so that only one of even and odd data points are printed as said head moves in said head feeding direction.

5. The method of claim 4, wherein said step of resetting the printing density of said head so that said overlapping portion prints with said low density comprises resetting said print head so that only the other of even and odd data points are printed as said head moves in said head feeding direction.

6. The method of one of claims 3 to 5, wherein said forwarding step comprises forwarding said paper such that said overlapping portion corresponds to one dot line.

# FIG. 1

# FIG. 2

12 DOT COLUMNS

24 DOT ROWS

## FIG. 3
## PRIOR ART

1st
PASS

2nd
PASS

23rd DOT ROW
24th DOT ROW
1st DOT ROW
2nd DOT ROW

# FIG. 4
## PRIOR ART

1st PASS

2nd PASS

23rd DOT ROW
24th DOT ROW
WHITE LINE
1st DOT ROW
2nd DOT ROW

# FIG. 5
## PRIOR ART

1st PASS

2nd PASS

23rd DOT ROW
1st DOT ROW
BLACK LINE
24th DOT ROW
2nd DOT ROW

FIG. 6

FIG. 8

23rd DOT ROW
24th DOT ROW
1st DOT ROW
2nd DOT ROW

1st PASS

2nd PASS

# FIG. 7

(24-Y)th DOT ROW

1st PASS

2X

22nd DOT ROW
23rd DOT ROW
24th DOT ROW
1st DOT ROW
2nd DOT ROW
3rd DOT ROW

2X

2nd PASS

24th DOT ROW

X

# FIG. 9

1st
PASS

23rd DOT ROW
1st DOT ROW
24th DOT ROW
2nd DOT ROW

2nd
PASS

# FIG. 10

1st
PASS

22nd DOT ROW
23rd DOT ROW
24th DOT ROW
1st DOT ROW
2nd DOT ROW

2nd
PASS

## FIG. 11

```
                    SHEET
              31    FORWARDING         MOTOR           28
                    DISTANCE           DRIVE
                    OUTPUT             CIRCUIT
                    MEANS
      30
  DATA            32   EXTRACTING                       26
  JUDGEMENT            MEANS
  MEANS
                                      RECORDING
  33       34         35              HEAD DRIVE
                                      CIRCUIT
  LINE     PATTERN    PRINT
  BUFFER   GENERATING BUFFER
           MEANS

           CHARACTER      29
           GENERATOR
```

## FIG. 13

```
        P1      P13

    L             L

  H                    106

  P12
            P24
```

# FIG. 12

# FIG. 14

START

(a) IS THIS IMAGE DATA ? — N

Y

(i) HAS FIRST PASS DATA BEEN INPUTTED ? — N

Y

(j) EXTRACT EVEN DIGITS FOR DATA FROM (H-N+1)TH DOT ROW AND ONWARDS

(k) HAS SINGLE PASS DATA PRINTED ? — N

Y

(l) FORWARD SHEET BY DISTANCE EQUAL TO (H-N) DOTS

(m) HAS SECOND PASS DATA INPUTTED ? — N

Y

(n) EXTRACT ODD DIGITS FOR DATA UP TO NTH DOT ROW

(o) HAS SINGLE PASS DATA PRINTED ? — N

Y

END

(b) HAS SINGLE PASS DATA BEEN INPUTTED ? — N

Y

(c) DEVELOP SINGLE PASS DATA INTO BIT DATA

(d) HAS DEVELOPING PROCESS ENDED ? — N

Y

(e) PRINT SINGLE PASS DATA

(f) HAS FIRST PASS PRINTING ENDED ? — N

Y

(g) FORWARD SHEET BY DISTANCE SPECIFIED BY HOST UNIT

(h) IS THERE STILL PRINT DATA ? — Y

N

16

# FIG. 15A

1st DOT ROW

23rd DOT ROW
24rd DOT ROW

D1  D1  D1  D1  D1

# FIG. 15B

D2  D2  D2  D2  D2

1st DOT ROW
2nd DOT ROW

24th DOT ROW

# FIG. 16

1st DOT ROW
2nd DOT ROW

FIRST
PRINT
PASS

23rd DOT ROW
24th DOT ROW (1st DOT ROW)
2nd DOT ROW

SECOND
PRINT
PASS

23rd DOT ROW
24th DOT ROW

FIG. 17A

FIG. 17B

FIG. 18A

FIG. 18B